# EUROPÄISCHE PATENTSCHRIFT

(11) **EP 1 174 435 B1**
(45) Veröffentlichungstag und Bekanntmachung des Hinweises auf die Patenterteilung: **09.11.2005**
(21) Anmeldenummer: 01114495.3
(22) Anmeldetag: 15.06.2001
(51) Int. Cl.: C08G 77/38, C07F 15/00, B01J 31/22, C07F 7/08

(54) **Verfahren zur Herstellung von Platin-Alkenylpolysiloxan-Komplexen, insbesondere von Platin-Divinyltetramethyldisiloxan**
Process for preparing complexes between platinum and alkenylsiloxane compounds, in particular platinum-divinyltetramethylsiloxane
Procédé de préparation des complexes de platine et des alkénylsiloxanes, en particulier de platine et le divinyltétraméthylsiloxane

(30) Priorität: 20.07.2000 DE 10035644
(43) Veröffentlichungstag der Anmeldung: 23.01.2002
(73) Patentinhaber: W.C. Heraeus GmbH, 63450 Hanau (DE)
(72) Erfinder: Reitz, Ramona, 63599 Biebergemünd (DE); Walter, Richard, Dr., 63755 Alzenau (DE)
(74) Vertreter: Kühn, Hans-Christian

(56) Entgegenhaltungen:
- EP-A- 0 894 804
- EP-A- 0 979 837
- US-A- 3 715 334

## Beschreibung

Die Erfindung betrifft ein Verfahren zur Herstellung von Platin-Alkenylpolysiloxan-Komplexen, nach diesem Verfahren hergestellte Platin-Alkenylpolysiloxan-Komplexe, insbesondere nach diesem Verfahren hergestelltes Platin-Divinyltetramethyldisiloxan sowie mehrere Verwendungen.

In EP 0 979 837 A2 wird ein Verfahren zur Herstellung eines Platinhydrosilylierungskatalysators offenbart, bei dem zunächst eine Haloplatinsäure, Alkenylpolysiloxan und Cycloalkylpolysiloxan enthaltende Mischung bei einer bestimmten Temperatur gerührt, anschließend mit ausreichender Lauge im wesentlichen das Halogen entfernt und anschließend die Mischung abfiltriert wird, um den entsprechenden Platinhydrosilylierungskatalysator zu erhalten, wobei darüber hinaus 0,3 bis ungefähr 20 mol Cycloalkylpolysiloxan je mol Alkenylpolysiloxan bereitgestellt werden müssen.

Nachteilig bei diesem Verfahren ist die Tatsache, dass das beispielsweise entstehende Platin-Divinyltetramethyldisiloxan eine dunkle Farbe aufweist, die den für bestimmte Spezifikationen notwendigen Anforderungen (farblos bis hellgelb gefärbt) nicht gerecht werden.

Aus dem vorgenannten ergibt sich das Problem, mit Hilfe eines neuartigen Verfahrens zur Herstellung von Platin-Alkenylpolysiloxan-Komplexen bzw. von Platin-Divinyltetra-methyldisiloxan die oben genannten Nachteile zumindest teilweise zu beseitigen, insbesondere ein kostengünstiges Verfahren zur Herstellung obiger Verbindung bereitzustellen, bei dem die Platin-Alkenylpolysiloxan-Komplexe insbesondere das Platin-Divinyltetra-methyldisiloxan nahezu farblose Verbindungen darstellen.

Dieses Problem wird erfindungsgemäß durch ein Verfahren nach Anspruch 1 gelöst.

Beim erfindungsgemäßen Verfahren wird zunächst eine Haloplatinverbindung mit mindestens einem Alkenylpolysiloxan unter Vorlage von Platin in Form eines Platin-Komplexes als Autokatalysator und unter Vorlage mindestens einer Base, insbesondere Hydrogencarbonat, Carbonat oder Hydroxid, bei möglichst niedriger Temperatur, insbesondere bei einer Temperatur unter T = + 60 °C, in einem von der Haloplatinverbindung oxidierbaren organischen Lösungsmittel/-gemisch umgesetzt.

In der Regel wird der Reaktionsansatz bei der Umsetzung beispielsweise mittels eines Magnetrührers zur besseren Vermischung und Vermeidung von lokalen Überhitzungen gerührt. Die einzelnen Reaktanden werden beispielsweise dem Reaktionsansatz portions- bzw. tropfenweise zugeführt.

Mit erfindungswesentlich ist die überraschende Erkenntnis, dass bei Vorlage geringer Mengen von Platin-Alkenylpolysiloxan die Reaktion als solche autokatalysiert wird, so dass die übliche Reaktionstemperatur um bis zu ca. 20 K gesenkt werden kann, was zur Folge hat, dass weniger Zersetzungs- und Nebenprodukte das eigentliche Produkt auch farblich weniger verunreinigen.

Bei einer ersten Variante des erfindungsgemäßen Verfahrens wird vor der Umsetzung Aktivkohle zugegeben. Nach der Umsetzung wird die erhaltene Aktivkohlesuspension eingeengt und anschließend die Feststoffteilchen und Aktivkohle von einer ersten flüssigen Phase, vorzugsweise mittels Filtrierens, getrennt oder die Feststoffteilchen und Aktivkohle von einer ersten flüssigen Phase getrennt und anschließend die erste flüssige Phase eingeengt. In der flüssigen Phase ist das Reaktionsprodukt Platin-Alkenylpolysiloxan enthalten.

Bei einer zweiten Variante des erfindungsgemäßen Verfahrens werden nach der Reaktion die Feststoffteilchen von einer ersten flüssigen Phase abgetrennt, um daraufhin die erste flüssige Phase mit Aktivkohle zu einer Aktivkohle-Suspension zu versetzen. Anschließend wird die Aktivkohle-Suspension eingeengt und danach die Aktivkohle von der ersten flüssigen Phase abgetrennt oder die Aktivkohle von der ersten flüssigen Phase abgetrennt und im Anschluß daran die erste flüssige Phase eingeengt.

Bei einer dritten Variante des erfindungsgemäßen Verfahrens wird nach der Reaktion die erhaltene Reaktionssuspension mit Aktivkohle zu einer Aktivkohle-Suspension versetzt. Danach wird die Aktivkohle-Suspension eingeengt und daraufhin die Feststoffteilchen und die Aktivkohle von einer ersten flüssigen Phase abgetrennt oder die Feststoffteilchen und Aktivkohle von einer ersten flüssigen Phase abgetrennt und anschließend die erste flüssige Phase eingeengt.

Es ist von Vorteil, wenn bei den Umsetzungsschritten der drei alternativen Ausführungsformen in bezug auf das als Haloplatinverbindung eingesetzte Platin mindestens 1 Gewichts-% Platin in Form eines Platin-Komplexes als Autokatalysator eingesetzt wird.

Vorteilhafterweise wird das Alkenylpolysiloxan zum Lösungsmittel/-gemisch und anschließend die Haloplatinverbindung dazugegeben, da bei umgekehrter Zugabe instabile Lösungen entstehen können, die auch Tage nach ihrer Herstellung noch reagieren können.

Bei dem erfindungsgemäßen Verfahren haben sich Divinyltetramethyldisiloxan als Alkenylpolysiloxan und Hexachloroplatinsäure als Haloplatinverbindung in der Praxis bewährt.

Darüber hinaus ist es von Vorteil, dass die Aktivkohle mit dem Lösungsmittel/-gemisch gewaschen und die erhaltene zweite flüssige Phase mit der ersten flüssigen Phase vereint wird, um die Produktausbeute zu erhöhen.

In vorteilhafter Weise hat es sich in der Praxis bewährt, als Lösungsmittel/-gemisch mindestens einen Alkohol, insbesondere Isopropanol und/oder Ethanol, zu verwenden.

Wird die Haloplatinverbindung als wasserfreie Lösung zum Reaktionsansatz, insbesondere als Haloplatinverbindungs-lsopropanollösung, dazugegeben, so findet vorteilhafter Weise eine kontrollierte CO₂-Gasentwicklung statt, die wiederum den Lösungsmittelaustrag durch die Gasentwicklung begrenzt, so dass auch strenge Emissionsgrenzwerte eingehalten werden können.

Schließlich hat sich die Umsetzung bei einer Temperatur von T = + 42 °C bis T = + 58 °C, insbesondere von T = + 48 °C bis T = + 52 °C, in der Praxis in vorteilhafter Weise bewährt.

Das mit diesem Verfahren hergestellte Platin-Alkenylpolysiloxan, insbesondere das Platin-Divinyltetramethyldisiloxan, ist im Vergleich mit aus dem Stand der Technik bekannten Verfahren hergestellten Substanzen nahezu farblos und weist Jodfarbzahlen von 0 bis 15 auf (gemessen nach DIN 6162).

Mitentscheidend für die positiven Eigenschaften ist die autokatalytische Verwendung von dem eigentlichen Produkt zur Herstellung desselben, da auf diese Art und Weise die Reaktionstemperatur um bis zu ca. 20 K gesenkt werden konnte, was wiederum zur Folge hat, dass weniger Zersetzungs- und Nebenprodukte entstehen und das Reaktionsprodukt weniger verunreinigen.

Die nachfolgenden Beispiele dienen zur Erläuterung der Erfindung:

### Beispiel 1:

Die Synthese wird unter Inertgas durchgeführt.

42 g Natriumhydrogencarbonat werden in der Apparatur vorgelegt und mit 62 ml Divinyltetramethyldisiloxan, 1 g Pt-Siloxan-Komplex und 150 ml Isopropanol suspendiert. Die Suspension wird unter Rühren auf T = + 48 °C bis + 52 °C erwärmt und bei dieser Temperatur gehalten.
Es wird eine Lösung von 10 g Pt als H₂PtCl₆-Feststoff in 25 ml Isopropanol hergestellt. Anschließend läßt man diese Lösung in 5ml-Schritten zur Suspension zulaufen. Nach jeder Zugabe wartet man, bis sich die Suspension wieder entfärbt hat. Die Temperatur wird zwischen T = + 48 °C und + 53 °C gehalten.
Die Reaktion verläuft exotherm und es ist eine starke Gasentwicklung zu beobachten. Die Suspension läßt man noch mindestens 2 h nachrühren, bis sie sich entfärbt hat.
Die entstandene Suspension wird unter Rühren auf Raumtemperatur abgekühlt und anschlie-βend über eine G3-Fritte filtriert und der Filterkuchen mit 75 ml Isopropanol gewaschen. Anschließend wird diese Lösung ("Lösung 1") mit 6 g Aktivkohle versetzt und im Rotationsverdampfer bei maximal T = + 45 °C unter Vakuum (bis zu einer Pt-Konzentration von ca. 20 %) eingedampft bis kein Destillatanfall mehr zu beobachten ist. Dann wird die Lösung über einen Blaubandfilter filtriert.
Die Aktivkohle wird mit 200 ml Isopropanol gewaschen und beim nächsten Versuch zu Lösung 1" gegeben.

### Beispiel 2:

Die Synthese wird unter Inertgas durchgeführt.

42 g Natriumhydrogencarbonat wird in der Apparatur vorgelegt und mit 69 g Trivinylpentamethyltrisiloxan, 2 g Pt-Siloxan-Komplex und 70 ml Ethanol suspendiert.
Man stellt eine Lösung von 10 g Pt als H₂PtCl₆-Feststoff in 25 ml Ethanol her.
Die weitere Vorgehensweise ist analog zu der in Beispiel 1 genannten, jedoch liegt die Reaktionstemperatur bei T = + 70 °C bis T = + 75 ° C, während zum Waschen des Filterkuchens und der Aktivkohle Ethanol eingesetzt wird.

### Beispiel 3:

Die Synthese wird unter Inertgas durchgeführt.

35 g Natriumhydrogencarbonat wird in der Apparatur vorgelegt und mit 60 g Divinylhexamethyltrisiloxan, 2 g Pt-Siloxan-Komplex und 50 ml Ethanol suspendiert.
Man stellt eine Lösung von 10 g Pt als H₂PtCl₆-Feststoff in 25 ml Ethanol her.
Die weitere Vorgehensweise ist analog zu der in Beispiel 1 genannten, jedoch liegt die Reaktionstemperatur bei T = + 70 °C bis + 75 °C, während zum Waschen des Filterkuchens und der Aktivkohle Ethanol eingesetzt wird.

### Beispiel 4:

Die Synthese wird unter Inertgas durchgeführt.

37 g Natriumhydrogencarbonat wird in der Apparatur vorgelegt und mit 77 g Divinyldiphenyldimethyldisiloxan, 2 g Pt-Siloxan-Komplex und 50 ml Ethanol suspendiert.
Man stellt eine Lösung von 10 g Pt als H₂PtCl₆-Feststoff in 25 ml Ethanol her.
Die weitere Vorgehensweise ist analog zu der in Beispiel 1 genannten, jedoch liegt die Reaktionstemperatur bei T = + 70 °C bis + 75 °C, während zum Waschen des Filterkuchens und der Aktivkohle Ethanol eingesetzt wird.

## Patentansprüche

1. Verfahren zur Herstellung von Platin-Alkenylpolysiloxan-Komplexen, insbesondere von Platin-Divinyltetramethyldisiloxan, mit folgenden Schritten:
a1.) Umsetzung einer Haloplatinverbindung mit mindestens einem Alkenylpolysiloxan unter Vorlage von Platin in Form eines Platin-Komplexes als Autokatalysator und unter Vorlage mindestens einer Base in einem von der Haloplatinverbindung oxidierbaren organischen Lösungsmittel/-gemisch und unter Vorlage von Aktivkohle;
b1.) Einengen der Aktivkohle-Suspension und anschließendes Abtrennen der Feststoffteilchen und der Aktivkohle von einer ersten flüssigen Phase oder
Abtrennen der Feststoffteilchen und der Aktivkohle von einer ersten flüssigen Phase und anschließendes Einengen der ersten flüssigen Phase; oder
a2.) Umsetzung einer Haloplatinverbindung mit mindestens einem Alkenylpolysiloxan unter Vorlage von Platin in Form eines Platin-Komplexes als Autokatalysator und unter Vorlage mindestens einer Base in einem von der Haloplatinverbindung oxidierbaren organischen Lösungsmittel/-gemisch;
b2.) Abtrennen der Feststoffteilchen von einer ersten flüssigen Phase und anschließendes Versetzen der ersten flüssigen Phase mit Aktivkohle zu einer Aktivkohle-Suspension;
c2.) Einengen der Aktivkohle-Suspension und anschließendes Abtrennen der Aktivkohle von der ersten flüssigen Phase oder
Abtrennen der Aktivkohle von der ersten flüssigen Phase und anschließendes Einengen der ersten flüssigen Phase;
oder
a3.) Umsetzung einer Haloplatinverbindung mit mindestens einem Alkenylpolysiloxan unter Vorlage von Platin in Form eines Platin-Komplexes als Autokatalysator und unter Vorlage mindestens einer Base in einem von der Haloplatinverbindung oxidierbaren organischen Lösungsmittel/-gemisch;
b3.) Versetzen der erhaltenen Reaktionssuspension mit Aktivkohle zu einer Aktivkohle-Suspension;
c3.) Einengen der Aktivkohle-Suspension und anschließendes Abtrennen der Feststoffteilchen und Aktivkohle von einer ersten flüssigen Phase oder
Abtrennen der Feststoffteilchen und Aktivkohle von einer ersten flüssigen Phase und anschließendes Einengen der ersten flüssigen Phase.

2. Verfahren nach Anspruch 1, **dadurch gekennzeichnet, dass** bei den Schritten a1.), a2.) und a3.) in bezug auf das als Haloplatinverbindung eingesetzte Platin mindestens 1 Gewichts-% Platin in Form eines Platin-Komplexes als Autokatalysator eingesetzt wird.

3. Verfahren nach einem der Ansprüche 1 bis 2, **dadurch gekennzeichnet, dass** zunächst das Alkenylpolysiloxan zum Lösungsmittel/-gemisch und anschließend die Haloplatinverbindung dazugegeben wird.

4. Verfahren nach einem der Ansprüche 1 bis 3, **dadurch gekennzeichnet, dass** es sich bei dem Alkenylpolysiloxan um Divinyltetramethyldisiloxan handelt.

5. Verfahren nach einem der Ansprüche 1 bis 4, **dadurch gekennzeichnet, dass** es sich bei der Haloplatinverbindung um Hexachloroplatinsäure handelt.

6. Verfahren nach einem der Ansprüche 1 bis 5, **dadurch gekennzeichnet, dass** die Aktivkohle mit dem Lösungsmittel/-gemisch gewaschen und eine erhaltene zweite flüssige Phase mit der ersten flüssigen Phase vereint wird.

7. Verfahren nach einem der Ansprüche 1 bis 6, **dadurch gekennzeichnet, dass** als Lösungsmittel/-gemisch mindestens ein Alkohol verwendet wird.

8. Verfahren nach Anspruch 7, **dadurch gekennzeichnet, dass** als Alkohol Isopropanol und/oder Ethanol verwendet wird.

9. Verfahren nach einem der Ansprüche 1 bis 8, **dadurch gekennzeichnet, dass** die Haloplatinverbindung als wasserfreie Lösung zum Reaktionsansatz dazugegeben wird.

10. Verfahren nach Anspruch 9, **dadurch gekennzeichnet, dass** eine Haloplatinverbindungs-Isopropanol-Lösung verwendet wird.

11. Verfahren nach einem der Ansprüche 1 bis 10, **dadurch** gezeichnet, dass die Umsetzung bei einer Temperatur von T = + 42 °C bis T = + 58 °C durchgeführt wird.

12. Verfahren nach einem der Ansprüche 1 bis 10, **dadurch gekennzeichnet, dass** die Umsetzung bei einer Temperatur von T = + 48 °C bis T = + 52 °C durchgeführt wird.

13. Verwendung von Platin-Alkenylpolysiloxan als Autokatalysator bei der Herstellung von Platin-Alkenylpolysiloxan.

14. Verwendung von Platin-Divinyltetramethyldisiloxan als Autokatalysator bei der Herstellung von Platin-Divinyltetramethyldisiloxan.

15. Verwendung von Platin-Alkenylpolysiloxan als Autokatalysator bei der Herstellung von Platin-Alkenylpolysiloxan nach einem Verfahren nach einem der Ansprüche 1 bis 12.

16. Verwendung von Platin-Divinyltetramethyldisiloxan als Autokatalysator bei der Herstellung von Platin-Divinyltetramethyldisiloxan nach einem Verfahren nach einem der Ansprüche 1 bis 12.

## Claims

1. Process for the preparation of platinum-alkenylpolysiloxane complexes, in particular of platinum-divinyltetramethyldisiloxane, comprising the following steps:
a1.) reaction of a haloplatinum compound with at least one alkenylpolysiloxane with initial introduction of platinum in the form of a platinum complex as an autocatalyst and with initial introduction of at least one base in an organic solvent/solvent mixture oxidizable by the haloplatinum compound and with initial introduction of active carbon;
b1.) concentration of the active carbon suspension and subsequent separation of the solid particles and of the active carbon from a first liquid phase or separation of the solid particles and of the active carbon from a first liquid phase and subsequent concentration of the first liquid phase;
or
a2.) reaction of a haloplatinum compound with at least one alkenylpolysiloxane with initial introduction of platinum in the form of a platinum complex as an autocatalyst and with initial introduction of at least one base in an organic solvent/solvent mixture oxidizable by the haloplatinum compound;
b2.) separation of the solid particles from a first liquid phase and subsequent addition of active carbon to the first liquid phase to give an active carbon suspension;
c2.) concentration of the active carbon suspension and subsequent separation of the active carbon from the first liquid phase or
separation of the active carbon from the first liquid phase and subsequent concentration of the first liquid phase;
or
a3.) reaction of a haloplatinum compound with at least one alkenylpolysiloxane with initial introduction of platinum in the form of a platinum complex as an autocatalyst and with initial introduction of at least one base in an organic solvent/solvent mixture oxidizable by the haloplatinum compound;
b3.) addition of active carbon to the reaction suspension obtained to give an active carbon suspension;
c3.) concentration of the active carbon suspension and subsequent separation of the solid particles and active carbon from a first liquid phase or
separation of the solid particles and active carbon from a first liquid phase and subsequent concentration of the first liquid phase.

2. Process according to Claim 1, **characterized in that**, based on the platinum used as the haloplatinum compound, at least 1% by weight of platinum in the form of a platinum complex is used as the autocatalyst in step a1.), a2.) and a3.).

3. Process according to either of Claims 1 and 2, **characterized in that** first the alkenylpolysiloxane is added to the solvent/solvent mixture and then the haloplatinum compound is added.

4. Process according to any of Claims 1 to 3, **characterized in that** the alkenylpolysiloxane is divinyltetramethyldisiloxane.

5. Process according to any of Claims 1 to 4, **characterized in that** the haloplatinum compound is hexachloroplatinic acid.

6. Process according to any of Claims 1 to 5, **characterized in that** the active carbon is washed with the solvent/solvent mixture, and a second liquid phase obtained is combined with the first liquid phase.

7. Process according to any of Claims 1 to 6, **characterized in that** at least one alcohol is used as the solvent/solvent mixture.

8. Process according to Claim 7, **characterized in that** isopropanol and/or ethanol is used as the alcohol.

9. Process according to any of Claims 1 to 8, **characterized in that** the haloplatinum compound is added as an anhydrous solution to the reaction batch.

10. Process according to Claim 9, **characterized in that** a haloplatinum compound/isopropanol solution is used.

11. Process according to any of Claims 1 to 10, **characterized in that** the reaction is carried out at a temperature of T = +42°C to T = +58°C.

12. Process according to any of Claims 1 to 10, **characterized in that** the reaction is carried out at a temperature of T = +48°C to T = +52°C.

13. Use of platinum-alkenylpolysiloxane as an autocatalyst in the preparation of platinum-alkenylpolysiloxane.

14. Use of platinum-divinyltetramethyldisiloxane as an autocatalyst in the preparation of platinum-divinyltetramethyldisiloxane.

15. Use of platinum-alkenylpolysiloxane as an autocatalyst in the preparation of platinum-alkenylpolysiloxane by a process according to any of Claims 1 to 12.

16. Use of platinum-divinyltetramethyldisiloxane as an autocatalyst in the preparation of platinum-divinyltetramethyldisiloxane by a process according to any of Claims 1 to 12.

## Revendications

1. Procédé de préparation de complexes platine- alcénylpolysiloxane, en particulier de platine- divinyltétraméthyldisiloxane, avec les étapes suivantes :
a.1) réaction d'un composé halogéné du platine avec au moins un alcénylpolysiloxane en la présence de platine sous forme d'un complexe du platine comme autocatalyseur et en présence d'au moins une base, dans un
solvant/mélange de solvants organiques oxydables par le composé halogéné du platine et en présence de charbon actif ;
b.1) concentration de la suspension de charbon actif et ensuite, séparation des particules solides et du charbon actif d'une première phase liquide, ou
séparation des particules solides et du charbon actif d'une première phase liquide et ensuite, concentration de la première phase liquide ;
ou
a.2) réaction d'un composé halogéné du platine avec au moins un alcénylpolysiloxane en la présence de platine sous forme d'un complexe du platine comme autocatalyseur et en présence d'au moins une base, dans un
solvant/mélange de solvants organiques oxydables par le composé halogéné du platine ;
b.2) séparation des particules solides d'une première phase liquide et ensuite, addition à la première phase liquide, de charbon actif en une suspension de charbon actif ;
c.2) concentration de la suspension de charbon actif et ensuite, séparation du charbon actif d'une première phase liquide, ou
séparation du charbon actif d'une première phase liquide, et ensuite, concentration de la première phase liquide ;
ou
a.3) réaction d'un composé halogéné du platine avec au moins un alcénylpolysiloxane en la présence de platine sous forme d'un complexe du platine comme autocatalyseur et en présence d'au moins une base, dans un
solvant/mélange de solvants organiques oxydables par le composé halogéné du platine ;
b.3) addition à la suspension de réaction obtenue, de charbon actif en une suspension de charbon actif ;
c.3) concentration de la suspension de charbon actif et ensuite, séparation des particules de matière solide et du charbon actif d'une première phase liquide, ou
séparation des particules de matière solide et du charbon actif d'une première phase liquide, et ensuite, concentration de la première phase liquide.

2. Procédé selon la revendication 1, **caractérisé en ce que** dans les étapes a.1), a.2) et a.3), par rapport au platine mis en oeuvre comme composé halogéné du platine, on met en
oeuvre au moins 1% en poids de platine sous forme d'un complexe du platine comme autocatalyseur.

3. Procédé selon la revendication 1 ou 2, **caractérisé en ce que** l'on ajoute d'abord, l'alcénylpolysiloxane au solvant/mélange de solvants et ensuite, le composé halogéné du platine.

4. Procédé selon l'une des revendications 1 à 3, **caractérisé en ce que** l'alcénylpolysiloxane consiste en le divinyltétraméthyldisiloxane.

5. Procédé selon l'une des revendications 1 à 4, **caractérisé en ce que** le composé halogéné du platine consiste en l'acide hexachloroplatinique.

6. Procédé selon l'une des revendications 1 à 5, **caractérisé en ce que** le charbon actif est lavé avec le solvant/mélange de solvants et on réunit la deuxième phase liquide obtenue et la première phase liquide.

7. Procédé selon l'une des revendications 1 à 6, **caractérisé en ce que** l'on utilise un alcool comme solvant/mélange de solvants.

8. Procédé selon la revendication 7, **caractérisé en ce que** l'on utilise comme alcool, l'isopropanol et/ou l'éthanol.

9. Procédé selon l'une des revendications 1 à 8, **caractérisé en ce que** le composé halogéné du platine est ajouté sous la forme d'une solution anhydre à la réaction.

10. Procédé selon la revendication 9, **caractérisé en ce que** l'on utilise une solution dans l'isopropanol du composé halogéné du platine.

11. Procédé selon l'une des revendications 1 à 10, **caractérisé en ce que** la réaction est réalisée à une température de T = +42°C à T = +58°C.

12. Procédé selon l'une des revendications 1 à 10, **caractérisé en ce que** la réaction est réalisée à une température de T = +48°C à T = +52°C.

13. Utilisation de platine-alcénylpolysiloxane comme autocatalyseur lors de la préparation de platine- alcénylpolysiloxane.

14. Utilisation de platine-divinyltétraméthyl-disiloxane comme autocatalyseur lors de la préparation de platine- divinyltétraméthyldisiloxane.

15. Utilisation de platine-alcénylpolysiloxane comme autocatalyseur lors de la préparation de platine- alcénylpolysiloxane selon un procédé suivant l'une des revendications 1 à 12.

16. Utilisation de platine-divinyltétraméthyl-disiloxane comme autocatalyseur lors de la préparation de platine- divinyltétraméthyldisiloxane selon un procédé suivant l'une des revendications 1 à 12.
